# EUROPÄISCHE PATENTSCHRIFT

(11) **EP 0 893 198 B1**
(45) Veröffentlichungstag und Bekanntmachung des Hinweises auf die Patenterteilung: **26.11.2003**
(21) Anmeldenummer: 98108844.6
(22) Anmeldetag: 15.05.1998
(51) Int. Cl.: B23Q 5/027, B24B 23/04

(54) **Handwerkzeugmaschine**
Portable power tool
Outil portable motorisé

(30) Priorität: 25.07.1997 DE 19732001
(43) Veröffentlichungstag der Anmeldung: 27.01.1999
(73) Patentinhaber: TTS Tooltechnic Systems AG & Co. KG, 73240 Wendlingen (DE)
(72) Erfinder: Steimel, Johannes, Dr., 73272 Neidlingen (DE)
(74) Vertreter: Reimold, Otto, Dipl.-Phys.Dr.

(56) Entgegenhaltungen:
- DE-A- 2 048 649
- DE-A- 2 322 638
- DE-A- 3 326 854
- DE-U- 7 137 280

## Beschreibung

Die Erfindung betrifft eine Handwerkzeugmaschine mit einem Werkzeugträger und einer Antriebsvorrichtung für den Werkzeugträger, mit einem Antriebsmotor, von dem aus eine Exzenteranordnung zu einer Exzenterbewegung um eine Drehachslinie antreibbar ist, wobei die Exzenteranordnung einen exzentrisch zur Drehachslinie angeordneten Unwuchtmassenkörper sowie ein den Werkzeugträger antreibendes Werkzeugträger-Antriebsteil enthält.

Eine solche Antriebsvorrichtung geht beispielsweise aus dem DE-GM 71 37 280 hervor. Es handelt sich hier um eine Schleifmaschine mit einer ein Schleifmittel tragenden, elastisch aufgehängten Arbeitsplatte als Werkzeugträger, die der Exzenterbewegung folgt, dabei durch die elastische Aufhängung jedoch an einer Rotation gehindert wird, so dass sie eine kreisende Bewegung ohne Eigenrotation ausführt. Die dabei durch die bewegten Massen auftretenden Unwuchtkräfte werden durch den Unwuchtmassenkörper ausgeglichen, so dass die Lager geschont werden und praktisch keine Vibrationen der Maschine auftreten.

Es gibt jedoch auch Anwendungsfälle, bei denen eine Linearbewegung des jeweiligen Werkzeugträgers erwünscht ist.

Eine Handwerkzeugmaschine mit einem eine solche Linearbewegung ausführenden Werkzeugträger ist in der DE 23 22 638 A beschrieben. In diesem Falle sind zwei in Bewegungsrichtung des Werkzeugträgers hintereinander angeordnete, gleichsinnige Exzenterbewegungen ausführende Exzenteranordnungen vorhanden, die jeweils eine Pleuelstange antreiben. Eine der Pleuelstangen treibt den Werkzeugträger und die andere Pleuelstange treibt einen Unwuchtmassenkörper an, wobei sich der Unwuchtmassenkörper parallel zum Werkzeugträger, dabei jedoch in entgegengesetzter Richtung bewegt, so dass in Bewegungsrichtung ein Massenausgleich erreicht wird. Quer zur Bewegungsrichtung des Werkzeugträgers ergeben sich durch die Pleuelstangen jedoch Unwuchtkräfte.

Ausgehend von diesem Stande der Technik liegt der vorliegenden Erfindung die Aufgabe zugrunde, eine Handwerkzeugmaschine der eingangs genannten Art mit einer Antriebsvorrichtung für einen zu einer Linearbewegung antreibbaren Werkzeugträger zu schaffen, wobei der Betrieb möglichst unwuchtfrei sein soll.

Diese Aufgabe wird erfindungsgemäß durch die in Anspruch 1 definierte Handwerkeugmaschine gelöst.

Auf diese Weise erhält man bei entsprechender Dimensionierung der Unwuchtmassenkörper sowohl in Bewegungsrichtung des Werkzeugträgers als auch quer hierzu stets einen Unwuchtausgleich, so dass sich der aus allen bewegten Massen ergebende Massenmittelpunkt der gesamten Anordnung einschließlich des Werkzeugträgers beim Betrieb seine Lage im wesentlichen unverändert beibehält.

Vorteilhafte Weiterbildungen des Gegenstandes der Erfindung gehen aus den Unteransprüchen hervor.

Die erfindungsgemäße Antriebsvorrichtung wird nun anhand der beigefügten Zeichnung näher erläutert. Es zeigen:
- Fig. 1: ein erstes Ausführungsbeispiel einer erfindungsgemäßen Antriebsvorrichtung mit einem von ihr angetriebenen Werkzeugträger in schematisierter Darstellung in Schrägansicht,
- Fig. 2: das Ausführungsbeispiel der Vorrichtung nach Fig. 1 im durch die beiden Drehachslinien verlaufenden Schnittbild,
- Fig. 3: eine Variante zu der ersten Ausführungsform nach den Fig. 1 und 2 mit einer Pleuelstangenanordnung als Antriebsteile in einem schematischen Schnittbild quer zu den Drehachslinien,
- Fig. 4: ein schwenkbar am Werkzeugträger gelagertes Kulissenteil in Draufsicht, wobei die beiden jeweils in eine schlitzartige Querausnehmung der Kulissenführung eingreifenden, im Querschnitt gezeigten Antriebsteile aus Veranschaulichungsgründen mit zu kleinem Durchmesser dargestellt sind,
- Fig. 5: ein fest mit dem Werkzeugträger verbundenes Kulissenteil in der Fig. 4 entsprechender Darstellung,
- Fig. 6a-d: vier verschiedene Momentaufnahmen bei der Exzenterbewegung der Unwuchtmassenkörper des ersten Ausführungsbeispiels gemäß den Fig. 1 und 2 in Richtung der Drehachslinien gesehen, in schematischer Darstellung,
- Fig. 7: das erste Ausführungsbeispiel gemäß den Fig. 1 und 2 in einer Teildarstellung, wobei zwischen Kulissenteil und Werkzeugträger zusätzlich eine Dichtmembran vorgesehen ist, und
- Fig. 8: eine weitere zweite Ausführungsform der erfindungsgemäßen Vorrichtung im Schnittbild, mit koaxial zueinander angeordneten Wellen und einer Pleuelstangenanordnung als Antriebsteile.

Die aus der Zeichnung hervorgehende Antriebsvorrichtung 1 dient zum Antreiben eines Werkzeugträgers 2 einer Werkzeugmaschine zu einer hin und her gehenden Linearbewegung 72. Bei der nicht dargestellten Werkzeugmaschine handelt es sich insbesondere um eine Handwerkzeugmaschine, beispielsweise um eine Schleifmaschine, bei der der Werkzeugträger 2 die Arbeitsplatte ist, deren Unterseite 4 ein Schleifmittel beispielsweise in Gestalt eines auswechselbaren Schleifblattes trägt, so daß bei auf ein Werkstück aufgesetzter Schleifmaschine durch die hin und her gehende Linearbewegung 72 des Werkzeugträgers 2 die Werkstückoberfläche schleifend bearbeitet wird.

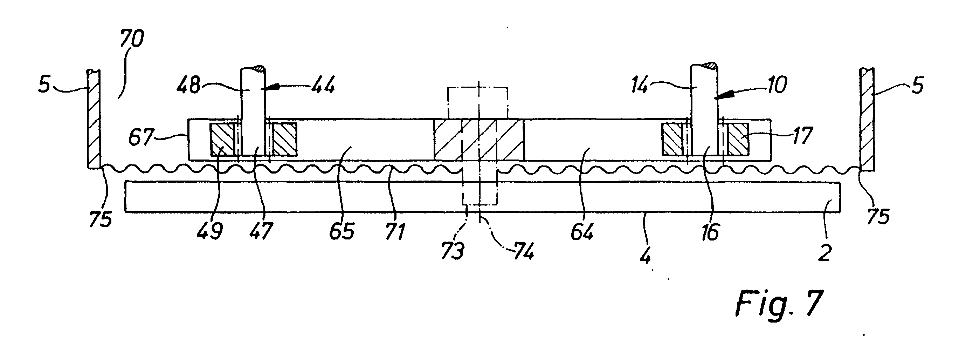

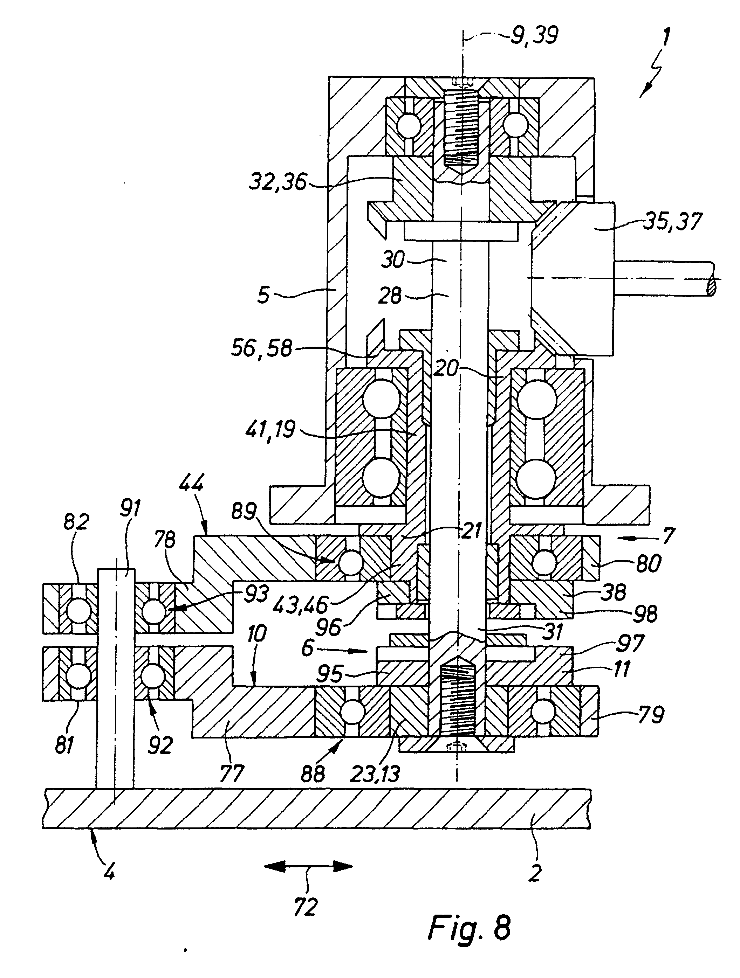

Da es im vorliegenden Zusammenhang im wesentlichen nur um das Prinzip der Antriebsvorrichtung 1 geht, sind die sonstigen Maschinenteile nicht dargestellt. Das Maschinengehäuse ist lediglich in den Fig. 7 und 8 schematisch bei 5 angedeutet.

Es versteht sich, daß die erfindungsgemäße Antriebsvorrichtung auch bei anderen Werkzeugmaschinen als Schleifmaschinen eingesetzt werden kann, bei denen der Werkzeugträger 2 zu einer Linearbewegung angetrieben werden soll.

Bei allen Ausführungsbeispielen weist die Antriebsvorrichtung 1 eine erste Exzenteranordnung 6 und eine zweite Exzenteranordnung 7 auf. Beide Exzenteranordnungen 6, 7 werden beispielsgemäß von einem einzigen Antriebsmotor 8 aus angetrieben, prinzipiell könnte jedoch auch jeder Exzenteranordnung 6, 7 ein gesonderter Motor zugeordnet sein.

Die beiden Exzenteranordnungen 6, 7 sind jeweils zu einer Exzenterbewegung um eine erste Drehachslinie 9 bzw. eine zweite Drehachslinie 39 antreibbar. Hierfür sitzen die Exzenteranordnungen 6, 7 je nach Ausführungsform an jeweils einer ortsfest mit dem Maschinengehäuse 5 verbundenen Achse 27 bzw. 40 oder Welle 28 bzw. 41, deren Zentrumslinie mit der Drehachslinie 9 bzw. 39 zusammenfällt. Die beiden Drehachslinien 9, 39 sind parallel zueinander ausgerichtet und verlaufen rechtwinkelig zur Bewegungsebene des Werkzeugträgers 2. Ferner enthalten die beiden Exzenteranordnungen 6, 7 jeweils einen bezüglich der zugehörigen Drehachslinie 9 bzw. 39 exzentrisch angeordneten Unwuchtmassenkörper 11 bzw. 38 sowie ein den Werkzeugträger 2 antreibendes Werkzeugträger-Antriebsteil 10 bzw. 44. Grundsätzlich würde es genügen, wenn der Werkzeugträger 2 mittels eines einzigen Antriebsteils 10 bzw. 44 angetrieben würde.

Zur Lagerung des mindestens einen Antriebsteils 10 bzw. 44 weist zumindest eine der Exzenteranordnungen 6 bzw. 7 in ihrem dem Werkzeugträger 2 zugewandten Endbereich ein Lagerteil 23 bzw. 43 auf, an dem das zugeordnete Antriebsteil 10 bzw. 44 gelagert ist. Zweckmäßigerweise sind zwei Lagerteile 23, 43 vorgesehen, die in Richtung der betreffenden Drehachslinien 9 bzw. 39 gesehen dem zugeordneten Unwuchtmassenkörper 11 bzw. 38 benachbart angeordnet sind. Bei angetriebener Antriebsvorrichtung 1 führen die beiden Lagerteile 23, 43 eine kreisende Bewegung aus, die mit Hilfe der Antriebsteile 10, 44 in die hin und her gehende Linearbewegung 72 des Werkzeugträgers 2 umgesetzt wird.

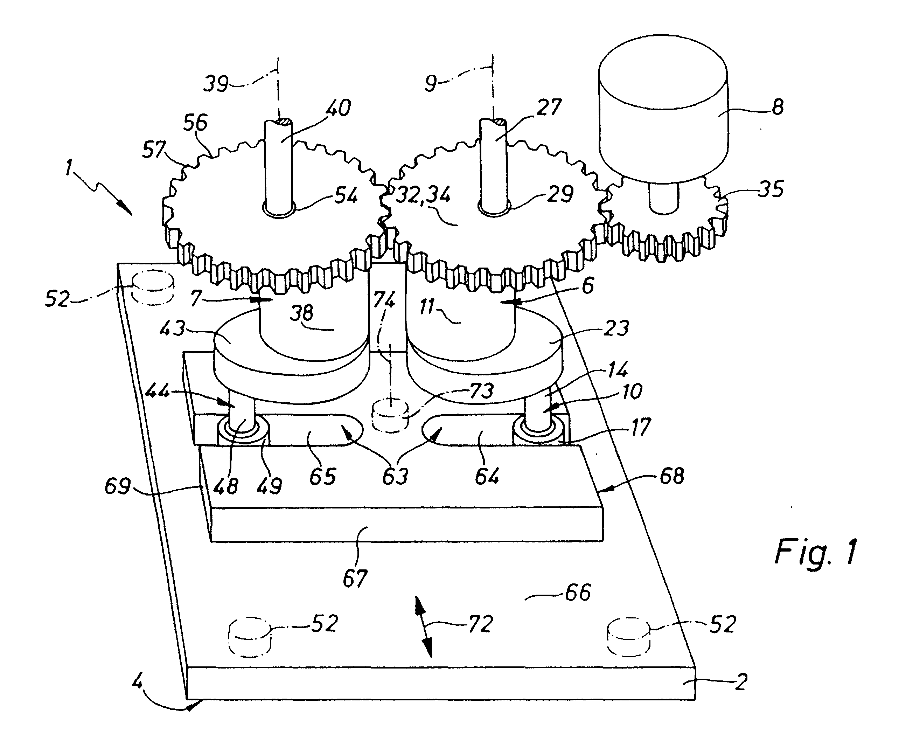

Die Anordnung ist dabei ferner so getroffen, daß die beiden Exzenteranordnungen 6, 7 gegensinnig zueinander um die Drehachslinien 9, 39 angetrieben werden, wobei ihre Winkelstellungen relativ zueinander so sind, daß sich der Gesamtschwerpunkt der beiden Exzenteranordnungen 6, 7 parallel zur Linearbewegung 72 des Werkzeugträgers 2 hin und her bewegt und dabei gegenläufig zu diesem ist. Wenn sich also in Fig. 1 der Werkzeugträger 2 nach vorne bzw. nach hinten bewegt, so bewegt sich der Gesamtschwerpunkt der beiden Exzenteranordnungen 6, 7 nach hinten bzw. nach vorne.

Auf diese Weise heben sich die Unwuchtkräfte der beiden Exzenteranordnungen 6, 7 in Richtung quer zur Bewegungsrichtung 72 des Werkzeugträgers 2 stets gegenseitig auf. Ferner erreicht man wegen der gegenläufigen Bewegung von Gesamtschwerpunkt der beiden Exzenteranordnungen 6, 7 und Werkzeugträger 2 in dessen Bewegungsrichtung 72 bei entsprechender Dimensionierung der beiden Unwuchtmassenkörper 11, 38, daß sich der aus allen bewegten Massen ergebende Massenmittelpunkt der gesamten Anordnung einschließlich des Werkzeugträgers 2 im wesentlichen unverändert stets an der gleichen Stelle befindet, so daß insgesamt eine hinsichtlich der Unwuchtkräfte ausgeglichene Anordnung vorliegt. Daher ergibt sich eine ruhig laufende Maschine ohne nennenswerte Vibrationen.

Die beiden Produkte von Masse eines Unwuchtmassenkörpers 11 bzw. 38 mal Abstand seines Schwerpunktes von der jeweils zugeordneten Drehachslinie 9 bzw. 39 sind gleich groß, und die Schwerpunkte der Unwuchtmassenkörper 11, 38 bewegen sich auf Kreisbahnen mit betragsmäßig gleicher Winkelgeschwindigkeit. Die Umlaufdauer der Schwerpunkte der beiden Unwuchtmassenkörper 11, 38 auf ihrer jeweiligen Kreisbahn ist demnach gleich groß.

Zweckmäßigerweise sind die Massen der beiden Unwuchtmassenkörper 11, 38 gleich groß, so daß ihre Schwerpunkte auf gleich großen Kreisbahnen umlaufen. Insbesondere sind die Unwuchtmassenkörper 11, 38 gleich ausgebildet.

Zu den beiden Exzenteranordnungen 6, 7 gehört ferner jeweils ein konzentrisch zur jeweiligen Drehachslinie 9 bzw. 39 angeordnetes, drehfest mit der Exzenteranordnung 6 bzw. 7 verbundenes Antriebsrad 32 bzw. 56, über das der Antrieb der zugeordneten Exzenteranordnung 6 bzw. 7 erfolgt. Das jeweilige Antriebsrad 32 bzw. 56 ist in dem dem Werkzeugträger 2 entgegengesetzten Endbereich der jeweiligen Exzenteranordnung 6 bzw. 7 angeordnet.

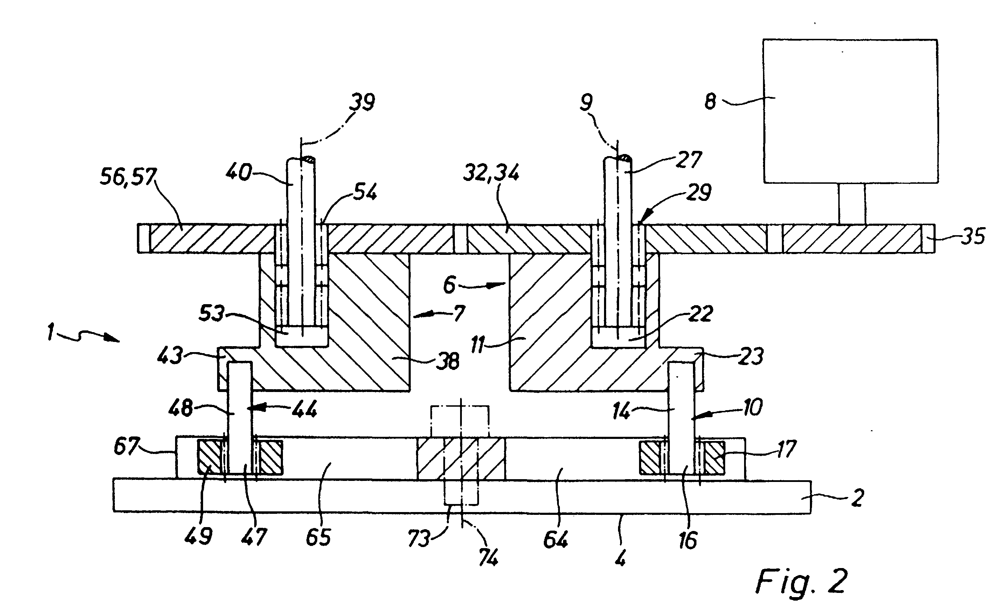

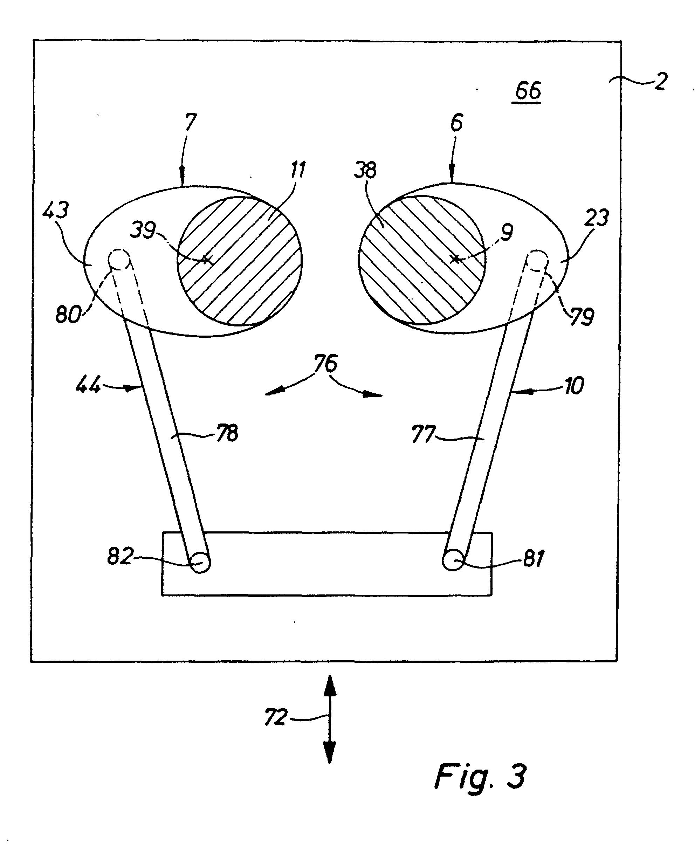

Im folgenden soll nun zunächst auf das erste Ausführungsbeispiel gemäß den Fig. 1 und 2 einschließlich der Variante in Fig. 3 eingegangen werden.

Bei diesem ersten Ausführungsbeispiel sind die Antriebsräder 32, 56 dem zugeordneten Unwuchtmassenkörper 11 bzw. 38 auf der dem Werkzeugträger 2 abgewandten Seite benachbart angeordnet und vorzugsweise an diesem festgelegt. Sie werden zweckmäßigerweise von zwei miteinander kämmenden Zahnrädern 34, 57 gebildet, von denen eines, das Zahnrad 34, vom Antriebsmotor 8 her angetrieben wird. Dabei sind die beiden Zahnräder 34, 57 gleich groß. Der Antrieb des vom Zahnrad 34 gebildeten Antriebsrades 32 erfolgt mittels eines vom Motor 8 angetriebenen Antriebsritzels 35, das mit dem Zahnrad 34 kämmt.

Selbstverständlich wäre anstatt eines Zahnradgetriebes auch eine andere Getriebeart einsetzbar, beispielsweise ein Riemengetriebe, ein Reibradgetriebe oder ein Kegelradgetriebe.

Ferner wurde bei dieser Ausführung vorgesehen, daß die beiden Exzenteranordnungen 6, 7 jeweils einschließlich des zugehörigen Antriebsrades drehbar auf einer ortsfest an der Werkzeugmaschine bzw. dem Maschinengehäuse 5 angeordneten Achse 27 bzw. 40 sitzen, deren Zentrumslinie mit der Drehachslinie 9 bzw. 39 zusammenfällt. Die Drehachsen 27, 40 durchgreifen das jeweilige Antriebsrad 32, 56 und greifen in eine Lagerausnehmung 22 bzw. 53 des jeweiligen Unwuchtmassenkörpers 11 bzw. 38 ein, wobei die Drehlagerung auf der Achse 27 bzw. 40 mittels einer in die Lagerausnehmung 22 bzw. 53 eingesetzten ersten Drehlageranordnung 29 bzw. 54 erfolgt.

Es versteht sich, daß die Exzenteranordnungen 6, 7 in Richtung der Drehachslinie 9 bzw. 39 feststehend gelagert sind.

Die beiden Exzenteranordnungen sind bei diesem Ausführungsbeispiel im wesentlichen gleich ausgebildet. Es wird jedoch bereits hier darauf hingewiesen, daß es im Unterschied zu diesem Ausführungsbeispiel prinzipiell ausreicht, wenn nicht beide Exzenteranordnungen 6, 7, sondern nur eine der Exzenteranordnungen mit einem Antriebsteil versehen ist, so daß man das Antriebsteil 10 oder das Antriebsteil 44 weglassen könnte.

Die exzentrisch an der jeweiligen Achse 27 bzw. 40 gelagerten Unwuchtmassenkörper 11, 38 weisen beispielsgemäß eine zylinderähnliche Gestalt auf und tragen an ihrem dem Werkzeugträger 2 zugewandten Endbereich ein Lagerteil 23 bzw. 43, das bezüglich der Drehachslinie 9 bzw. 39 in die dem Unwuchtmassenkörper diametral entgegengesetzte Richtung vorsteht, wo es das zugeordnete Antriebsteil 10 bzw. 44 trägt. Auf Grund dieser Anordnung führt das Antriebsteil 10 bzw. 44 im angetriebenen Zustand eine um die jeweils zugeordnete Drehachslinie 9 bzw. 39 kreisende Bewegung aus, wobei es dem betreffenden Unwuchtmassenkörper 11 bzw. 38 mit Bezug zur Drehachslinie 9 bzw. 39 stets diametral gegenüberliegt. Beispielsgemäß ist das Lagerteil 1 scheibenähnlich ausgebildet und weist eine elliptische Kontur auf.

Ist nur ein Antriebsteil 10 bzw. 44 vorhanden, braucht nur an einem der beiden Unwuchtmassenkörper ein solches Lagerteil 23 bzw. 43 vorhanden sein.

Die Exzenterbewegung der beiden Exzenteranordnungen 6, 7 bzw. der beiden Antriebsteile 10, 44 wird beim ersten Ausführungsbeispiel mittels einer Kulissenführung 63 in die Linearbewegung 72 des Werkzeugträgers 2 umgesetzt. Hierzu weisen die Antriebsteile 10, 44 ein im angetriebenen Zustand um die jeweilige Drehachslinie 9 bzw. 39 exzentrisch kreisendes freies Ende 16 bzw. 47 auf, das mit der mit dem Werkzeugträger 2 verbundenen oder an diesem ausgebildeten Kulissenführung 63 in Eingriff steht. Dabei kann am freien Ende 16 bzw. 47 des jeweiligen Antriebsteils 10 bzw. 44 ein an der Kulissenführung 63 angreifender Rollenkörper 17 bzw. 49, Gleitstein oder dergleichen Körper angeordnet sein.

Beispielsgemäß enthält das Antriebsteil 10 bzw. 44 einen vom Lagerteil 23 bzw. 43 des Unwuchtmassenkörpers 11 bzw. 38 zum Werkzeugträger 2 hin abstehenden Antriebszapfen 14 bzw. 48, der parallel zur Drehachslinie 9 bzw. 39 verläuft und an seinem freien Ende 16 bzw. 47 den jeweiligen Rollenkörpepr 17 bzw. 49 verdrehbar trägt, wobei, wie erwähnt, auch Gleitsteine vorgesehen sein könnten.

Die Kulissenführung 63 weist zwei quer zur Linearbewegungsrichtung 72 des Werkzeugträgers 2 schlitz- oder nutartige Querausnehmungen 64, 65 auf, in die jeweils eines der Antriebsteile 10, 44 eingreift. Die Kulissenführung 63 ist in der vorliegenden Ausführung an einem Kulissenteil 67 ausgebildet, das an der Oberseite 66 des Werkzeugträgers 2 angebracht ist. Dabei sind die beiden Querausnehmungen 64, 65 in der Mitte, das heißt mit ihren einander zugewandten Enden, mit Abstand zueinander angeordnet, während sie an den entgegengesetzten Querseiten 68, 69 des Kulissenteils 67 frei auslaufen. Die Anordnung könnte diesbezüglich jedoch auch anders getroffen sein. Auch wäre es möglich, anstelle der beiden voneinander getrennten Querausnehmungen 64, 65 eine durchgehende, beiden Antriebsteilen 10, 44 bzw. deren Rollenkörpern 17, 49 oder Gleitsteinen zugeordnete Querausnehmung vorzusehen. Weiter oben wurde bereits erwähnt, daß der Werkzeugträger 2 auch nur mit einem Antriebsteil 10 oder 44 angetrieben werden könnte. In diesem Falle würde selbstverständlich eine einzige Querausnehmung 64 bzw. 65 genügen, wobei man den Werkzeugträger 2 und die zugehörige Antriebsvorrichtung in Querrichtung so zueinander anordnen müßte, daß der Antrieb des Werkzeugträgers etwa in ihrer Breitenmitte stattfindet.

Die Antriebsteile 10, 44 und im vorliegenden Beispiel die Rollenkörper 17, 49 sind in ihrem Durchmesser an die in Bewegungsrichtung 72 des Werkzeugträgers 2 gemessene Breite der Querausnehmungen 64, 65 so angepaßt, daß sie in diesen im wesentlichen ohne Spiel gelagert sind.

Bei der gegensinnig exzentrisch kreisenden Bewegung der Antriebsteile 10, 44 werden auf das Kulissenteil 67 und somit auf den Werkzeugträger 2 nur Kräfte rechtwinkelig zur Verlaufsrichtung der Querausnehmungen 64, 65, also in Richtung 72 der Linearbewegung des Werkzeugträgers 2, übertragen, da sich die Antriebsteile 10, 44 bzw. deren Rollenkörper 17 bzw. 49 in Verlaufsrichtung der Querausnehmungen 64, 65 ohne Beaufschlagung des Kulissenteils 67 hin und her bewegen können.

Da es möglich ist, daß das Kulissenteil 67 durch zwischen ihm und den Rollenlörpern 17, 49 auftretende Reibungskräfte auch in Verlaufsrichtung der Querausnehmungen 64, 65 aufnimmt, ist eine symmetrische Anordnung, wie sie aus den Fig. 1 und 2 hervorgeht, mit zwei gegensinnig sich drehenden Rollenkörpern 17, 49 vorteilhaft, da sich hierbei die durch Reibung entstehenden Querkräfte aufheben.

Das Kulissenteil 67 wird beim ersten Ausführungsbeispiel von einem Plattenkörper gebildet, wobei dieser einen im wesentlichen rechteckigen Umriß haben kann.

Zweckmäßigerweise ist zwischen dem Werkzeugträger 2 und dem Kulissenteil 67 eine zur Abdichtung des vom Maschinengehäuse 5 begrenzten Maschinen-Innenraums 70 dienende Dichtmembran 71 angeordnet. Die Dichtmembran 71 erstreckt sich vorzugsweise parallel zum Werkzeugträger 2 und ist mit ihrer äußeren umlaufenden Randpartie 75 am Maschinengehäuse 5 befestigt. Die zur Lagerung des Kulissenteils 67 am Werkzeugträger 2 dienenden Verbindungsteile durchdringen die Dichtmembran 71, wobei diese die Verbindungsteile dichtend umschließt.

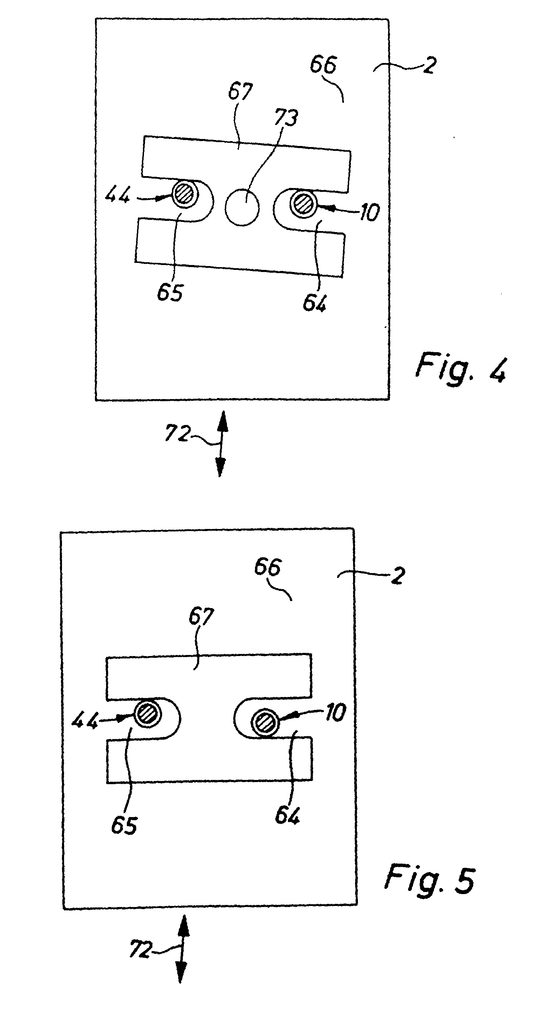

Die Fig. 4 und 5 zeigen zwei Alternativen, wie das Kulissenteil 67 am Werkzeugträger 2 angeordnet werden kann. Im Falle der Fig. 4 ist das Kulissenteil 67 in seinem mittleren Bereich zwischen den beiden Querausnehmungen 64, 65 um eine parallel zu den Drehachslinien 9, 39 verlaufende Schwenkachse 74 schwenkbar am Werkzeugträger 2 angebracht, wobei die Schwenkachse 74 von einem Schwenkzapfen 73 gebildet werden kann. Anstelle dieses festen Schwenkzapfens 73 kann die Schwenkbarkeit auch durch ein Elastomer-Gelenk, das heißt durch Gummi-Körper, erreicht werden, an dem bzw. denen das Kulissenteil 67 gelagert ist. Die schwenkbare Befestigung des Kulissenteils 67 bringt folgenden Vorteil mit sich:

Wirken von außen her quer zur Bewegungsrichtung 72 des Werkzeugträgers 2 gerichtete Kräfte auf den Werkzeugträger 2 ein, kann sich der Werkzeugträger 2 relativ zum seine Lage beibehaltenden Kulissenteil 67 den Querkräften entsprechend verschwenken, so daß nach wie vor beide Antriebsteile 10, 44 bzw. Rollenkörper 17, 49 in gleicher Weise das Kulissenteil 67 beaufschlagen.

Bei der Variante nach Fig. 5 ist das Kulissenteil 67 dagegen starr mit dem Werkzeugträger 2 verbunden, so daß sich das Kulissenteil 67 beim Angriff von Querkräften auf den Werkzeugträger 2 zusammen mit diesem verschwenkt. Die Antriebsteile 10, 44 bzw. Rollenkörper 17, 49 behalten dagegen ihre ursprüngliche Lage bei, so daß der Werkzeugträger 2 in Richtung seiner momentanen Bewegung (oberer oder unterer Einzelpfeil des Doppelpfeils 72) nur noch von einem der Antriebsteile 10, 44 bzw. Rollenkörper 17, 49 beaufschlagt wird.

Wie bereits erwähnt, laufen die Antriebsteile 10, 44 bzw. deren Rollenkörper 17, 49 oder alternativ hierzu nicht näher dargestellte Gleitsteine im wesentlichen ohne Spiel in den Querausnehmungen 64, 65. Ein kleines Spiel ist jedoch erforderlich, damit die Rollenkörper 17, 49 an den Wänden der Querausnehmungen 64, 65 abrollen können. Bei dem Einsatz von Gleitsteinen könnte von diesem Spiel abgesehen werden, da ein Abrollen hierbei nicht vorgesehen ist. Im Ausmaß dieses Spiels kann das Schrägstellen des Werkzeugträgers 2 relativ zu den Antriebsteilen 10, 44 erfolgen, wie es anhand der Fig. 5 erläutert worden ist. In den Fig. 4 und 5 wurde dieses Spiel zwischen Kulissenteil 67 und Antriebsteilen 10, 44 bei weitem zu groß dargestellt, um den erläuterten Effekt zu verdeutlichen.

In Abwandlung des aus der Zeichnung hervorgehenden Ausführungsbeispieles könnte eine dem Kulissenteil 67 entsprechende Kulissenführung 63 auch unmittelbar in die Oberseite 66 des Werkzeugträgers 2 eingebracht sein.

Anhand dieser Ausführungsform soll nun die Funktionsweise einer im wesentlichen unwuchtfreien Antriebsvorrichtung 1 für einen Werkzeugträger 2 anhand der Fig. 6a-d näher erläutert werden. Jede der Fig. 6a-d zeigt eine Momentaufnahme der Bewegung der schematisch dargestellten Exzenteranordnungen 6, 7, wobei sich die einzelnen Figuren jeweils um einen Winkel von 90° unterscheiden, so daß insgesamt vier Zeitpunkte eines 360°-Umlaufs dargestellt sind. Die Drehrichtung der Exzenteranordnung 6 wird durch den Pfeil 85 und die entgegengesetzte Drehrichtung der Exzenteranordnung 7 durch den Pfeil 86 angegeben. Selbstverständlich könnten beide Drehrichtungen auch jeweils entgegengesetzt zu den Pfeilen 85, 86 gerichtet sein.

In Fig. 6a nehmen die beiden Exzenteranordnungen 6, 7 eine solche Stellung zueinander ein, daß die beiden Antriebsteile 10, 44 den größtmöglichen und die Schwerpunkte der beiden Unwuchtmassenkörper 11, 38 ihren kleinstmöglichen Abstand zueinander aufweisen. Die Antriebsteile 10, 44 und die Schwerpunkte der Unwuchtmassenkörper 11, 38 befinden sich in dieser Stellung auf der durch die beiden Drehachslinien 9, 39 gehenden Querebene, die stets, das heißt unabhängig von der momentanen Stellung der Antriebsvorrichtung 1, quer zur Bewegungsrichtung 72 des Werkzeugträgers 2 steht. Somit heben sich die auf einer Kreisbahn bewegten Massen der Unwuchtmassenkörper 11, 38 in Querrichtung sozusagen auf, so daß in Querrichtung keine Unwuchtkräfte auftreten. Ferner wird in der Stellung gemäß Fig. 6a der nicht dargestellte Werkzeugträger 2 der Bewegung der Antriebsteile 10, 44 entsprechend in Richtung des oberen Pfeils des Doppelpfeils 72 bewegt, während sich der Gesamtschwerpunkt der beiden Unwuchtmassenkörper 11, 38 in Richtung des unteren Pfeils des Doppelpfeils 72 bewegt, so daß man auch in dieser Richtung einen Unwuchtausgleich erhält.

Haben die Antriebsteile 10, 44 die in Fig. 6b dargestellte Lage erreicht, befindet sich der Werkzeugträger 2 in einem ersten Umkehrpunkt, das heißt, er bewegt sich anschließend in Fig. 6b dem unteren Einzelpfeil des Doppelpfeils 72 entsprechend nach unten. Gleichzeitig befinden sich die Schwerpunkte der beiden Unwuchtmassenkörper 11, 38 und somit der Gesamtschwerpunkt beider Unwuchtmassenkörper 11, 38 am unteren Umkehrpunkt, so daß er sich anschließend in Richtung des oberen Einzelpfeils des Doppelpfeils 72 nach oben bewegt. Wiederum erhält man also einen Ausgleich der Unwuchtkräfte sowohl in Querrichtung als auch in der der Linearbewegung 72 des Werkzeugträgers 2 entsprechenden Längsrichtung.

Nach einer weiteren Drehbewegung um 90° um die Drehachslinien 9, 39 nehmen die beiden Exzenteranordnungen 6, 7 die aus Fig. 6c hervorgehende Stellung ein, in der die beiden Antriebsteile 10, 44 ihren nächstmöglichen und die Schwerpunkte der beiden Unwuchtmassenkörper 11, 38 ihren größtmöglichen Abstand voneinander einnehmen, so daß die Antriebsteile 10, 44 und die Schwerpunkte der Unwuchtmassenkörper 11, 38 wie in Fig. 6a in der von den beiden Drehachslinien 9, 39 aufgespannten Ebene liegen. Der Werkzeugträger 2 bewegt sich also in Richtung des unteren Einzelpfeils und der Gesamtschwerpunkt der beiden Unwuchtmassenkörper 11, 38 in Richtung des oberen Einzelpfeils des Doppelpfeils 72. Daher ergibt sich auch in dieser Stellung eine sowohl in Querrichtung als auch in Bewegungsrichtung 72 des Werkzeugträgers 2 unwuchtfreie Anordnung.

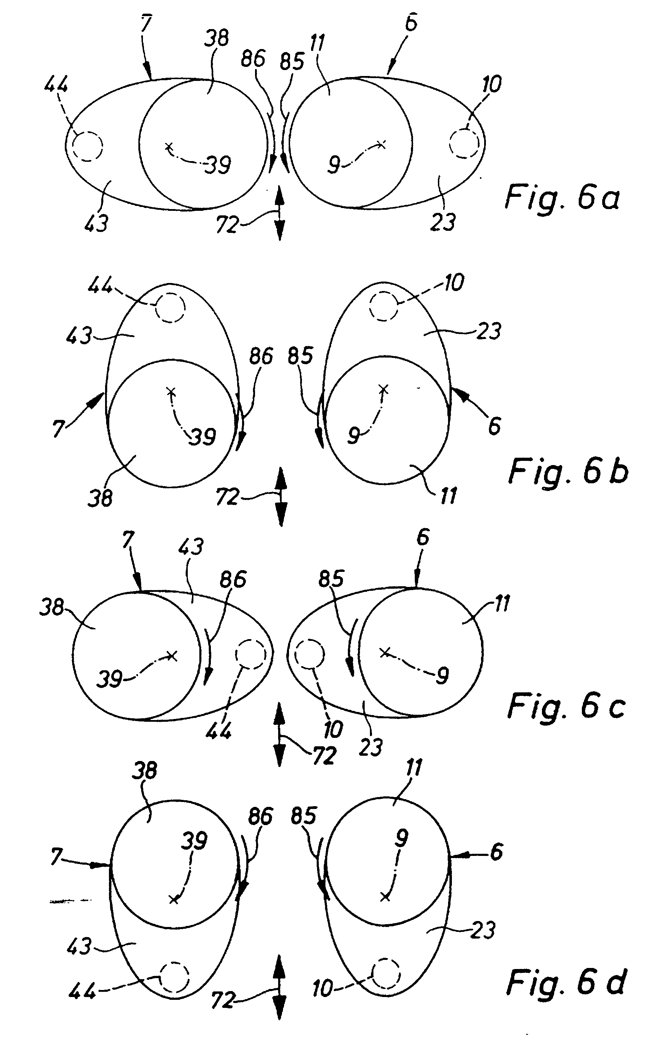

Die Stellung gemäß Fig. 6d schließlich ist der aus Fig. 6b hervorgehenden Stellung in Längsrichtung entgegengesetzt, so daß der Werkzeugträger 2 seine zweite Endstellung einnimmt. Ansonsten gilt bezüglich der auftretenden Kräfte bzw. des Unwuchtausgleichs das gleiche wie im Falle der Fig. 6b.

Die in Fig. 3 dargestellte Variante des ersten Ausführungsbeispiels unterscheidet sich dadurch, daß das mindestens eine Antriebsteil 10, 44 von einer die Exzenterbewegung in die Linearbewegung 72 des Werkzeugträgers 2 umsetzenden Pleuelstangenanordnung 76 gebildet ist. Hierbei sind zwei Pleuelstangen 77, 78 vorgesehen, die an dem jeweils zugeordneten Lagerteil 23 bzw. 43 angelenkt sind, so daß sie bei der Drehung des Lagerteils 23 bzw. 43 mit ihrem dem Lagerteil zugeordneten Ende 79, 80 eine um die betreffende Drehachslinie 9 bzw. 39 kreisende Bewegung ausführen. Die Bewegung dieser Enden 79, 80 entspricht der Bewegung der Antriebsteile 10, 44, wie sie oben anhand der Fig. 6a-d erläutert wurde. Das jeweils entgegengesetzte Ende 81 bzw. 82 der Pleuelstangen 77 bzw. 78 ist am Werkzeugträger 2 angelenkt und treibt diesen in Bewegungsrichtung 72 an. Die Pleuelstangenanordnung 76 ist demnach eine Alternative zu der von den Antriebsteilen 10, 44 beaufschlagten Kulissenführung 63.

Die grundsätzlichen Ausführungen zur Unwuchtfreiheit der Antriebsvorrichtung 1 anhand der Fig. 6a-d sind auch für die Variante mit der Pleuelstangenanordnung 76 zutreffend, da lediglich die Kraftübertragung zwischen Exzenteranordnung 6 bzw. 7 und Werkzeugträger 2 unterschiedlich ausgeführt ist.

Bei den beiden Varianten des ersten Ausführungsbeispiels gemäß den Fig. 1 bis 3 lassen sich die Umlaufbewegungen der beiden Exzenteranordnungen 6, 7 auch so beschreiben, daß sie spiegelbildlich mit Bezug auf die die Bewegungsrichtung 72 des Werkzeugträgers 2 enthaltende Mittelebene zwischen den beiden Exzenteranordnungen 6, 7 sind. Die Schwerpunkte der Unwuchtmassenkörper 11 bzw. 38 bewegen sich auf Kreisbahnen und durchlaufen die der jeweils anderen Kreisbahn geringst beabstandete Kreisbahnstelle bei jedem Umlauf im wesentlichen gleichzeitig.

Im folgenden soll nun auf die zweite Ausführungsform nach Fig. 8 näher eingegangen werden.

Bei der Antriebsvorrichtung 1 aus Fig. 8 fallen die beiden parallelen Drehachslinien 9, 39 zusammen. Die Exzenteranordnungen 6, 7 sitzen hier auf drehbar an der Werkzeugmaschine bzw. am Maschinengehäuse 5 gelagerten Wellen 28, 41, die ortsfest bezüglich des Maschinengehäuses 5 angeordnet sind. Zumindest eine Welle 41 der einen Exzenteranordnung 7 ist als Hohlwelle 19 ausgebildet und umschließt die Welle 28 der anderen Exzenteranordnung 6 koaxial, wobei die beiden Endpartien 30, 31 der innenliegenden Welle 28 in Richtung der Drehachslinien 9, 39 aus der von der Welle 41 gebildeten Hohlwelle 19 herausragen. Mittels einer zweiten Drehlageranordnung 59 ist die Hohlwelle 19 drehbar an der innenliegenden Welle 28 gelagert, so daß sich beide Wellen 28, 41 unabhängig voneinander drehen können.

Die Antriebsräder 32, 56 sind an der jeweils dem Werkzeugträger 2 entgegengesetzten Endpartie 30 der innenliegenden Welle 28 bzw. der Endpartie 31 der Hohlwelle 19 drehfest angeordnet. Dabei sind die beiden Antriebsräder 32, 56 in Richtung der Drehachslinien 9, 39 beabstandet und zweckmäßigerweise jeweils von einem Kegelrad 36 bzw. 58 gebildet. Das vom Antriebsmotor 8 angetriebene Antriebsritzel 35 ist beispielsgemäß ebenfalls als Kegelrad 37 ausgeführt und steht an zwei diametral gegenüberliegenden Stellen seiner Verzahnung mit jeweils einem der von den Kegelrädern 36, 58 gebildeten Antriebsräder 32, 56 in Eingriff. Im angetriebenen Zustand drehen sich die Antriebsräder 32, 56 und somit zugeordneten Exzenteranordnungen 6, 7 in entgegengesetzte Richtungen um die zusammenfallenden Drehachslinien 9, 39. Der Antriebsmotor 8 treibt demnach beide Antriebsräder 32, 56 gleichzeitig an, wobei die Drehwinkelstellung der Antriebsräder 32, 56 und folglich der Exzenteranordnungen 6, 7 relativ zueinander erhalten bleibt.

An der jeweils dem Werkzeugträger 2 zugewandten Endpartie 21 bzw. 31 der Hohlwelle 19 bzw. der innenliegenden Welle 28 ist das jeweils zugeordnete Lagerteil 43 bzw. 23 angeordnet. Die Lagerteile 23, 43 weisen eine kreisrunde Umfangslinie auf, die exzentrisch zu den beiden Drehachslinien 9, 39 und dabei in einer radial zu den Drehachslinien 9, 39 aufgespannten Ebene verläuft. Beim Ausführungsbeispiel ist das Lagerteil 43 bzw. 23 von einer kreisscheibenförmigen Lagerplatte 46 bzw. 13 gebildet, die exzentrisch an der jeweils zugeordneten Welle 41 bzw. 28 sitzt. Das zugeordnete Antriebsteil 44 bzw. 10 greift im Bereich der Umfangslinie am Lagerteil 43 bzw. 23 an und umschließt dieses vorzugsweise vollständig ringförmig. Hierbei ist das Antriebsteil 44 bzw. 10 drehbar am Umfangsbereich des Lagerteils 43 bzw. 23 gelagert, wobei zweckmäßigerweise eine Wälzlageranordnung 89 bzw. 88 zwischengeschaltet ist.

Die Antriebsteile 10, 44 sind auch im vorliegenden Fall von einer Pleuelstangenanordnung 76 gebildet, wobei vorzugsweise zwei Pleuelstangen 77, 78 vorgesehen sind. Das den Exzenteranordnungen 6, 7 zugeordnete Ende 79, 80 der Pleuelstangen 77, 78 ist wie beschrieben am betreffenden Lagerteil 23, 43 gelagert. Die beiden entgegengesetzten Enden 81, 82 der Pleuelstangen 77, 78 beaufschlagen den Werkzeugträger 2 und greifen gemäß der Ausführungsform nach Fig. 8 an einem gemeinsamen Verbindungszapfen 91 an, an dem sie jeweils drehbar gelagert sind. Beispielsgemäß ist zwischen dem Verbindungszapfen 91 und dem jeweiligen Ende 81 bzw. 82 der Pleuelstange 77 bzw. 78 eine Wälzlageranordnung 92 bzw. 93 vorgesehen.

Bei dieser zweiten Ausführungsform wäre es gemäß der Variante des ersten Ausführungsbeispiels nach Fig. 3 ebenfalls möglich, daß die beiden Pleuelstangen 77, 78 an zwei unterschiedlichen Punkten am Werkzeugträger 2 angreifen.

Die Unwuchtmassenkörper 11, 38 der Exzenteranordnungen 6, 7 sind benachbart zum betreffenden Lagerteil 23 bzw. 43 drehfest an der jeweils zugeordneten Welle 28 bzw. 41 angeordnet. Beim zweiten Ausführungsbeispiel sind die Unwuchtmassenkörper 11, 38 auf den einander zugewandten Seiten der Lagerteile 23, 43 angeordnet, so daß die beiden Unwuchtmassenkörper 11, 38 voneinander beabstandet nebeneinanderliegen. Ein jeweiliger Unwuchtmassenkörper 11 bzw. 38 weist eine im wesentlichen scheibenähnliche Basispartie 95 bzw. 96 auf, an die sich in Richtung der Drehachslinie 9 bzw. 39 gesehen ein U-förmig im Umfangsbereich der Basispartie 95 bzw. 96 verlaufender Unwuchtvorsprung 97 bzw. 98 anschließt.

Im angetriebenen Zustand der beiden Exzenteranordnungen 6, 7 werden die Antriebsräder 32, 56 mittels des vom Kegelrad 37 gebildeten Antriebsritzels 35 in unterschiedliche Richtungen um die beiden Drehachslinien 9, 39 angetrieben. Somit drehen sich auch das jeweils zugeordnete Lagerteil 23 bzw. 43 und der jeweils zugeordnete Unwuchtmassenkörper 11 bzw. 38 in entgegengesetzte Richtungen. Auf Grund der Exzentrizität der Lagerteile 23, 43 werden die Pleuelstangen 77, 78 in Richtung 72 der Linearbewegung des Werkzeugträgers 2 bewegt, wobei diese Bewegung mittels des Verbindungszapfens 91 auf den Werkzeugträger 2 übertragen wird.

Die Momentaufnahme des zweiten Ausführungsbeispiels, die in Fig. 8 dargestellt ist, entspricht der Momentaufnahme des ersten Ausführungsbeispiels gemäß Fig. 6d. Der Werkzeugträger 2 hat seinen Umkehrpunkt erreicht und bewegt sich im nächsten Moment gemäß dem rechten Einzelpfeil des Doppelpfeils 72 in Fig. 8. Die beiden Unwuchtmassenkörper 11, 38 bewegen sich gleichzeitig auf Kreisbahnen um die Drehachslinien 9, 39 in entgegengesetzter Drehrichtung und liegen sich nach einem Viertelsumlauf bezüglich der Drehachslinien 9, 39 diametral gegenüber. Diese Situation würde beim ersten Ausführungsbeispiel der Fig. 6a entsprechen.

Die Unwuchtmassenkörper 11, 38 bewegen sich dann weiter und gelangen im zweiten Umkehrpunkt des Werkzeugträgers 2 nach einem halben Umlauf wieder in Richtung der Drehachslinien 9, 39 gesehen nebeneinander zu liegen, wobei eine der Situation in der Fig. 6b entsprechenden Position erreicht wäre.

Anschließend bewegt sich der Werkzeugträger 2 gemäß dem linken Einzelpfeil des Doppelpfeils 72. Die Unwuchtmassenkörper 11, 38 bewegen sich über die der Fig. 6c entsprechenden Position in die Stellung zurück, die in Fig. 8 dargestellt ist.

Die Kreisbewegung der Unwuchtmassenkörper 11, 38 kann in zwei Komponenten, nämlich in Richtung 72 und in die dazu rechtwinkelig verlaufende, in der Ebene des Werkzeugträgers 2 liegende Querrichtung, unterteilt werden. In Richtung 72 gesehen bewegen sich die Unwuchtmassenkörper 11, 38 immer gegenläufig zum Werkzeugträger 2, wodurch sich in dieser Richtung 72 die bewegten Massen sozusagen aufheben. In Querrichtung bewegen sich die beiden Unwuchtmassenkörper 11, 38 relativ zueinander jeweils gegenläufig, so daß auch in dieser Querrichtung keine Unwucht auftritt. Die Gesamtanordnung ist demnach im wesentlichen unwuchtfrei. Dieses Grundprinzip ist dasselbe wie beim ersten Ausführungsbeispiel gemäß den Fig. 1 bis 3.

Bei allen Ausführungsvarianten ist noch eine Halteeinrichtung zm Halten des Werkzeugträgers 2 an der Werkzeugmaschine bzw. dem Maschinenehäuse 5 vorgesehen, wobei diese Halteeinrichtung so ausgebildet ist, daß der Werkzeugträger 2 seine Linearbewegung 72 ausführen kann. Diese Halteeinrichtung kann von einer gleichzeitig eine Linearführung für den Werkzeugträger 2 bildenden Halte- und Führungseinrichtung oder wie beim Ausführungsbeispiel dadurch gebildet werden, daß der Werkzeugträger 2 über elastische Haltekörper 52 mit dem Maschinengehäuse 5 oder einem sonstigen Maschinenteil verbunden ist, die in Fig. 1 strichpunktiert angedeutet sind. Im Falle eines rechteckigen Werkzeugträgers 2 können beispielsweise vier ebenfalls einer Rechteckanordnung entsprechend angeordnete Haltekörper 52 vorhanden sein. Durch die Haltekörper 52 ist der Werkzeugträger 2 also elastisch nachgiebig an der Maschine angebracht, so daß er die Linearbewegung 72 ausführen kann. Solche elastischen Haltekörper 52 sind bei Handschleifmaschinen üblich.

## Patentansprüche

1. Handwerkzeugmaschine mit einem Werkzeugträger und einer Antriebsvorrichtung für den Werkzeugträger (2), mit einem Antriebsmotor (8), von dem aus eine Exzenteranordnung (6) zu einer Exzenterbewegung um eine Drehachslinie (9) antreibbar ist, wobei die Exzenteranordnung (6) einen exzentrisch zur Drehachslinie (9) angeordneten Unwuchtmassenkörper (11) sowie ein den Werkzeugträger (2) antreibendes Werkzeugträger-Antriebsteil (10) enthält, wobei die Exzenterbewegung in eine hin und her gehende Linearbewegung (72) des Werkzeugträgers (2) umgesetzt wird und eine zweite Exzenteranordnung (7) vorgesehen ist, die ebenfalls einen Unwuchtmassenkörper (38) aufweist und die zu einer gegensinnig zur Exzenterbewegung der ersten Exzenteranordnung (6) gerichteten Exzenterbewegung um eine parallel zur ersten Drehachslinie (9) verlaufende zweite Drehachslinie (39) antreibbar ist, wobei die durch die beiden Drehachslinien (9, 39) gehende Ebene quer zur Bewegungsrichtung (72) des Werkzeugträgers (2) steht, derart, daß sich der Gesamtschwerpunkt der beiden Exzenteranordnungen (6,7) parallel zur Linearbewegung (72) des Werkzeugträgers (2) gegenläufig zu diesem hin und her bewegt.

2. Handwerkzeugmaschine nach Anspruch 1, **dadurch gekennzeichnet, daß** die zweite Exzenteranordnung (7) ebenfalls ein den Werkzeugträger (2) antreibendes Werkzeugträger-Antriebsteil (44) enthält.

3. Handwerkzeugmaschine nach Anspruch 1 oder 2, **dadurch gekennzeichnet, daß** die beiden Produkte von Masse eines Unwuchtmassenkörpers (11 bzw. 38) mal Abstand seines Schwerpunktes von der zugeordneten Drehachslinie (9 bzw. 39) gleich groß sind und sich die Schwerpunkte der Unwuchtmassenkörper (11, 38) gegensinnig auf Kreisbahnen mit betragsmäßig gleicher Winkelgeschwindigkeit bewegen.

4. Handwerkzeugmaschine nach Anspruch 3, **dadurch gekennzeichnet, daß** die Massen der beiden Unwuchtmassenkörper (11, 38) gleich groß sind und daß die beiden Unwuchtmassenkörper (11, 38) insbesondere gleich ausgebildet sind.

5. Handwerkzeugmaschine nach einem der Ansprüche 1 bis 4, **dadurch gekennzeichnet, daß** die Exzenteranordnungen (6, 7) jeweils an einer ortsfest an der Werkzeugmaschine angeordneten Achse (27, 40) oder Welle (28, 41) sitzen, deren Zentrumslinie mit der Drehachslinie (9,39) zusammenfällt.

6. Handwerkzeugmaschine nach einem der Ansprüche 1 bis 5, **dadurch gekennzeichnet, daß** mindestens eine der Exzenteranordnungen (6, 7) in ihrem dem Werkzeugträger (2) zugewandten Endbereich ein Lagerteil (23, 43) aufweist, an dem das zugeordnete Antriebsteil (10, 44) gelagert ist.

7. Handwerkzeugmaschine nach Anspruch 6, **dadurch gekennzeichnet, daß** das Lagerteil (23, 43) in Richtung der betreffenden Drehachslinie (9 bzw. 39) gesehen dem zugeordneten Unwuchtmassenkörper (11 bzw. 38) benachbart angeordnet ist.

8. Handwerkzeugmaschine nach Anspruch 6 oder 7, **dadurch gekennzeichnet, daß** das Lagerteil (23 bzw. 43) eine kreisrunde Umfangslinie aufweist, die exzentrisch zur betreffenden Drehachslinie (9 bzw. 39) in einer radial zu dieser verlaufenden Ebene verläuft, wobei das zugeordnete Antriebsteil (10 bzw. 44) im Bereich der Umfangslinie am Lagerteil (23 bzw. 43) angreift und dieses insbesondere vollständig ringförmig umgreift.

9. Handwerkzeugmaschine nach einem der Ansprüche 1 bis 8, **dadurch gekennzeichnet, daß** die erste und/oder die zweite Exzenteranordnung (6 bzw. 7) ein konzentrisch zur Drehachslinie (9 bzw. 39) angeordnetes Antriebsrad (32 bzw. 56) aufweist, über das der Antrieb der zugeordneten Exzenteranordnung (6 bzw. 7) erfolgt.

10. Handwerkzeugmaschine nach Anspruch 9, **dadurch gekennzeichnet, daß** das jeweilige Antriebsrad (32 bzw. 56) in dem dem Werkzeugträger (2) entgegengesetzten Endbereich der jeweiligen Exzenteranordnung (6 bzw. 7) angeordnet ist.

11. Handwerkzeugmaschine nach Anspruch 9 oder 10, **dadurch gekennzeichnet, daß** die beiden Antriebsräder (32, 56) von zwei miteinander kämmenden Zahnrädern (34, 57) gebildet werden, von denen eines vom Antriebsmotor (8) her angetrieben wird.

12. Handwerkzeugmaschine nach Anspruch 9 oder 10, **dadurch gekennzeichnet, daß** der Antriebsmotor (8) im Antriebszustand beide Antriebsräder (32, 56) antreibt, wobei die Drehwinkelstellung der Antriebsräder (32, 56) relativ zueinander erhalten bleibt.

13. Handwerkzeugmaschine nach einem der Ansprüche 1 bis 12, **dadurch gekennzeichnet, daß** die beiden Exzenteranordnungen (6, 7) im wesentlichen gleich ausgebildet sind.

14. Handwerkzeugmaschine nach einem der Ansprüche 1 bis 13, **dadurch gekennzeichnet, daß** das mindestens eine Antriebsteil (10, 44) dem zugeordneten Unwuchtmassenkörper (11 bzw. 38) mit Bezug zur betreffenden Drehachslinie (9 bzw. 39) diametral entgegengesetzt angeordnet ist, so daß es im angetriebenen Zustand der Antriebsvorrichtung (1) eine um diese Drehachslinie (9 bzw. 39) kreisende Bewegung ausführt.

15. Handwerkzeugmaschine nach einem der Ansprüche 1 bis 14, **dadurch gekennzeichnet, daß** das mindestens eine Antriebsteil (10, 44) ein im angetriebenen Zustand um die jeweilige Drehachslinie (9, 39) exzentrisch kreisendes freies Ende (16. 47) aufweist, das mit einer mit dem Werkzeugträger (2) verbundenen oder an diesem ausgebildeten Kulissenführung (63) in Eingriff steht, über die die Exzenterbewegung des Antriebsteils (10, 44) in die Linearbewegung (72) des Werkzeugträgers (2) umgesetzt wird.

16. Handwerkzeugmaschine nach Anspruch 15, **dadurch gekennzeichnet, daß** am freien Ende (16, 47) des mindestens einen Antriebsteils (10, 44) ein an der Kulissenführung (63) angreifender Rollenkörper (17, 49) oder Gleitstein angeordnet ist.

17. Handwerkzeugmaschine nach Anspruch 15 oder 16, **dadurch gekennzeichnet, daß** die Kulissenführung (63) mindestens eine quer zur Linearbewegung (72) des Werkzeugträgers (2) verlaufende, schlitz- oder nutartige Querausnehmung (64, 65) aufweist, in die das mindestens eine Antriebsteil (10, 44) eingreift.

18. Handwerkzeugmaschine nach einem der Ansprüche 15 bis 17, **dadurch gekennzeichnet, daß** die Kulissenführung (63) an einem an der den Exzenteranordnungen (6, 7) zugewandten Oberseite (66) des Werkzeugträgers (2) angeordneten Kulissenteil (67) vorgesehen ist.

19. Handwerkzeugmaschine nach Anspruch 18, **dadurch gekennzeichnet, daß** das Kulissenteil (67) um eine parallel zu den Drehachslinien (9, 39) verlaufende Schwenkachse (74) schwenkbar am Werkzeugträger (2) angeordnet ist.

20. Handwerkzeugmaschine nach einem der Ansprüche 1 bis 13, **dadurch gekennzeichnet, daß** das mindestens eine Antriebsteil (10, 44) eine die Exzenterbewegung in die Linearbewegung (72) des Werkzeugträgers (2) umsetzende Pleuelstangenanordnung (76) bildet.

21. Handwerkzeugmaschine nach einem der Ansprüche 1 bis 20, **dadurch gekennzeichnet, daß** die beiden parallelen Drehachslinien (9, 39) zusammenfallen.

22. Handwerkzeugmaschine nach Anspruch 21, **dadurch gekennzeichnet, daß** die beiden Exzenteranordnungen (6, 7) jeweils an einer ortsfest an der Werkzeugmaschine angeordneten Welle (28, 41) sitzen, wobei zumindest die eine Welle (41) als Hohlwelle (19) ausgebildet ist und koaxial zur anderen Welle (28) verläuft.

23. Handwerkzeugmaschine nach Anspruch 22, **dadurch gekennzeichnet, daß** die Hohlwelle (19) drehbar um die Drehachslinien (9, 39) an der anderen Welle (28) gelagert ist, deren beiden Endpartien (30, 31) aus der Hohlwelle (19) herausragen.

24. Handwerkzeugmaschine nach einem der Ansprüche 21 bis 23, **dadurch gekennzeichnet, daß** an den dem Werkzeugträger (2) entgegengesetzten Endpartien (20, 30) der beiden Wellen (19, 28) jeweils ein zum Antrieb der Wellen (19, 28) dienendes, drehfest angeordnetes Antriebsrad (32, 56) vorgesehen ist, wobei die beiden Antriebsräder (32, 56) in Richtung der Drehachslinien (9, 39) beabstandet angeordnet sind.

25. Handwerkzeugmaschine nach Anspruch 24, **dadurch gekennzeichnet, daß** die Unwuchtmassenkörper (11, 38) an der dem Werkzeugträger (2) zugewandten Endpartie (21, 31) einer jeweils zugeordneten Welle (19, 28) sitzen.

26. Handwerkzeugmaschine nach einem der Ansprüche 1 bis 25, **dadurch gekennzeichnet, daß** die Handwerkzeugmaschine eine Schleifmaschine und der Werkzeugträger (2) eine ein Schleifmittel tragende, insbesondere rechteckige Arbeitsplatte ist.

27. Handwerkezeugmaschine nach einem der Ansprüche 1 bis 26, **dadurch gekennzeichnet, daß** zur Abdichtung des Maschinen-Innenraums (70) von der Umgebung zwischen Werkzeugträger (2) und Kulissenteil (67) eine Dichtmembran (71) angeordnet ist.

## Claims

1. Manually operated machine tool with a tool carrier and a drive unit for the tool carrier (2), comprising a drive motor (8) from which a cam arrangement (6) can be driven for eccentric movement about a rotary axis line (9), the cam arrangement (6) incorporating an unbalanced mass body (11) in an eccentric location relative to the rotary axis line (9) and a tool carrier drive part (10) driving the tool carrier (2), wherein the eccentric movement is converted into a reciprocating linear movement (72) of the tool carrier (2) and a second cam arrangement (7) is provided, which also incorporates an unbalanced mass body (38) and can be driven for eccentric movement opposed to that of the first cam arrangement (6) about a second rotary axis line (39) parallel to the first rotary axis line (9), the plane extending through the two rotary axis lines (9, 39) lying at right angles to the direction of movement (72) of the tool carrier (2), so that the overall centre of gravity of the two cam arrangements (6, 7) is displaced in a reciprocating manner parallel and in opposite directions to the linear movement (72) of the tool carrier (2).

2. Manually operated machine tool according to claim 1, **characterised in that** the second cam arrangement (7) also incorporates a tool carrier drive part (44) driving the tool carrier (2).

3. Manually operated machine tool according to claim 1 or 2, **characterised in that** the two products of the mass of an unbalanced mass body (11 or 38) multiplied by the distance of its centre of gravity from the associated rotary axis line (9 or 39) are equal and **in that** the centres of gravity of the unbalanced mass bodies (11, 38) are displaced in opposite directions at equal angular velocities.

4. Manually operated machine tool according to claim 3, **characterised in that** the masses of the two unbalanced mass bodies (11, 38) are equal and that the two unbalanced mass bodies (11, 38) are, in particular, identical in design.

5. Manually operated machine tool according to any of claims 1 to 4, **characterised in that** each of the cam arrangements (6, 7) is mounted on an axis (27, 40) or shaft (28, 41) fixed to the machine tool, the centre line of which coincides with the rotary axis line (9, 39).

6. Manually operated machine tool according to any of claims 1 to 5, **characterised in that** at least one of the cam arrangements (6, 7) has a bearing part (23, 43) in the end area adjacent to the tool carrier (2), on which the associated drive part (10, 44) is mounted.

7. Manually operated machine tool according to claim 6, **characterised in that** the bearing part (23, 43) is located adjacent to the associated unbalanced mass body (11 or 38) if viewed in the direction of the corresponding rotary axis line (9 or 39).

8. Manually operated machine tool according to claim 6 or 7, **characterised in that** the bearing part (23 or 43) has a circular circumferential line which is eccentric relative to the corresponding rotary axis line (9 or 39) in a plane which is radial relative thereto, the associated drive part (10 or 44) being in engagement with the bearing part (23 or 43) in the area of the circumferential line and in particular encompassing it completely in an annular shape.

9. Manually operated machine tool according to any of claims 1 to 8, **characterised in that** the first and/or the second cam arrangement (6 or 7) has a drive gear (32 or 56) arranged concentric with the rotary axis line (9 or 39) to drive the associated cam arrangement (6 or 7).

10. Manually operated machine tool according to claim 9, **characterised in that** each drive gear (32 or 56) is located **in that** end area of the associated cam arrangement (6 or 7) which is opposite the tool carrier (2).

11. Manually operated machine tool according to claim 9 or 10, **characterised in that** the two drive gears (32, 56) are represented by meshing gears (34, 57), one of which is driven from the drive motor (8).

12. Manually operated machine tool according to claim 9 or 12, **characterised in that** the drive motor (8) drives both drive gears (32, 56) in the driving state while maintaining the relative rotary angle position of the drive gears (32, 56).

13. Manually operated machine tool according to any of claims 1 to 12, **characterised in that** the two cam arrangements (6, 7) are substantially identical in design.

14. Manually operated machine tool according to any of claims 1 to 13, **characterised in that** at the least one drive part (10, 44) is arranged diametrically opposite the associated unbalanced mass body (11 or 38) with regard to the corresponding rotary axis line (9 or 39), so that it performs a circular movement about said rotary axis line (9 or 39) in the driven state ofthe drive unit (1).

15. Manually operated machine tool according to any of claims 1 to 14, **characterised in that** the at least one drive part (10, 44) has a free end (16, 47) eccentrically revolving about the associated rotary axis line (9, 39) in the driven state, which is in engagement with a link guide (63) connected to or provided in the tool carrier (2) and converting the eccentric movement of the drive part (10, 44) into the linear movement (72) of the tool carrier (2).

16. Manually operated machine too] according to claim 15, **characterised in that** a roller body (17, 49) or slider engaging the link guide (63) is fitted to the free end (16, 47) of the at least one drive part (10, 44).

17. Manually operated machine tool according to claim 15 or 16, **characterised in that** the link guide (63) has at least one slot- or groove-like cross recess (64, 65) extending at right angles to the linear movement (72) of the tool carrier (2), with which the at least one drive part (10, 44) is in engagement.

18. Manually operated machine tool according to any of claims 15 to 17, **characterised in that** the link guide (63) is provided on a link part (67) located on the top (66) of the tool carrier (2) facing the cam arrangements (6, 7).

19. Manually operated machine tool according to claim 18, **characterised in that** the link part (67) is mounted on the tool carrier (2) to pivot about a swivelling axis (74) extending parallel to the rotary axis lines (9, 39).

20. Manually operated machine tool according to any of claims 1 to 13, **characterised in that** the at least one drive part (10, 44) forms a connecting rod arrangement (76) converting the eccentric movement into the linear movement (72) of the tool carrier (2).

21. Manually operated machine tool according to any of claims 1 to 20, **characterised in that** the two parallel rotary axis lines (9, 39) coincide.

22. Manually operated machine tool according to claim 21, **characterised in that** each of the two cam arrangements (6, 7) is mounted on a shaft (28, 41) fixed to the machine tool, at least one shaft (41) being designed as a hollow shaft (19) coaxial with the other shaft (28).

23. Manually operated machine tool according to claim 22, **characterised in that** the hollow shaft (19) is supported on the other shaft (28) for rotation about the rotary axis lines (9, 39), the end sections (30, 31) protruding from the hollow shaft (19).

24. Manually operated machine tool according to any of claims 21 to 23, **characterised in that** those end sections (20, 30) of the two shafts (19, 28) which are opposite the tool carrier (2) are fitted with drive gears (32, 56) secured against rotation for driving the shafts (19, 28), the two drive gears (32, 56) being arranged at a distance in the direction of the rotary axis lines (9, 39).

25. Manually operated machine tool according to claim 24, **characterised in that** the unbalanced mass bodies (11, 38) are located on that end section (21, 31) of the associated shaft (19, 28) which is adjacent to the tool carrier (2).

26. Manually operated machine tool according to any of claims 1 to 25, **characterised in that** the manually operated machine tool is a grinding machine and the tool carrier (2) is an in particular rectangular worktop supporting an abrasive.

27. Manually operated machine tool according to any of claims 1 to 26, **characterised in that** a sealing membrane (71) is provided between the tool carrier (2) and the link part (67) to seal the interior (70) of the machine against the environment.

## Revendications

1. Machine-outil à main comprenant un porte-outil et un dispositif d'entraînement pour le porte-outil (2), comprenant un moteur d'entraînement (8), à partir duquel un agencement d'excentrique (6) peut être entraîné dans un mouvement excentrique autour d'une ligne d'axe de rotation (9), l'agencement d'excentrique (6) comprenant un élément de masse déséquilibré (11 ) disposé en position excentrique par rapport à la ligne d'axe de rotation (9), ainsi qu'une pièce d'entraînement du porte-outil (10) qui entraîne le porte-outil (2), dans laquelle le mouvement excentrique est transformé dans un mouvement linéaire de va-et-vient (72) du porte-outil (2) et un deuxième agencement d'excentrique (7) est prévu, lequel comprend également un élément de masse déséquilibré (38) et peut être entraîné dans un mouvement excentrique dirigé dans le sens opposé au mouvement excentrique du premier agencement d'excentrique (6), autour d'une deuxième ligne d'axe de rotation (39) qui s'étend parallèlement à la première ligne d'axe de rotation (9), le plan passant par les deux lignes d'axe de rotation (9, 39) étant orienté transversalement à la direction de mouvement (72) du porte-outil (2), de telle sorte que le centre de gravité global des deux agencements d'excentrique (6, 7) se déplace dans un va-et-vient parallèlement au mouvement linéaire (72) du porte-outil (2), et dans le sens opposé à celui-ci.

2. Machine-outil à main selon la revendication 1, **caractérisée en ce que** le deuxième agencement d'excentrique (7) comprend également une pièce d'entraînement du porte-outil (44) qui entraîne le porte-outil (2).

3. Machine-outil à main selon la revendication 2 ou 3, **caractérisée en ce que** les deux produits de la masse d'un élément de masse déséquilibré (11 ou 38) par la distance de son centre de gravité depuis la ligne d'axe de rotation respective (9 ou 39) sont identiques et **en ce que** les centres de gravité des éléments de masse déséquilibrés (11, 38) se déplacent en sens contraire sur des trajectoires circulaires à une vitesse angulaire proportionnellement identique.

4. Machine-outil à main selon la revendication 3, **caractérisée en ce que** les masses des deux éléments de masse déséquilibrés (11, 38) sont identiques et **en ce que** les deux éléments de masse déséquilibrés (11, 38) sont en particulier réalisés de manière identique.

5. Machine-outil à main selon l'une des revendications 1 à 4, **caractérisée en ce que** les agencements d'excentrique (6, 7) se situent chacun sur un axe (27,40) ou un arbre (28,41 ) monté en position fixe sur la machine-outil, dont la ligne centrale coïncide avec la ligne d'axe de rotation (9, 39).

6. Machine-outil à main selon l'une des revendications 1 à 5, **caractérisée en ce qu'**au moins l'un des agencements d'excentrique (6, 7) présente dans sa zone d'extrémité dirigée vers le porte-outil (2) une pièce d'appui (23, 43) sur laquelle la pièce d'entraînement correspondante (10, 44) prend appui.

7. Machine-outil à main selon la revendication 6, **caractérisée en ce que** la pièce d'appui (23, 43), observée dans la direction de la ligne d'axe de rotation correspondante (9 ou 39), est montée en position adjacente à l'élément de masse déséquilibré correspondant (11 ou 38).

8. Machine-outil à main selon la revendication 6 ou 7, **caractérisée en ce que** la pièce d'appui (23 ou 43) présente une ligne de circonférence circulaire, qui s'étend de manière excentrique par rapport à la ligne d'axe de rotation correspondante (9 ou 39) dans un plan radial à celle-ci, la pièce d'entraînement correspondante (10 ou 44) coopérant dans la zone de la ligne de circonférence avec la pièce d'appui (23 ou 43) et l'entourant en particulier entièrement dans une conformation annulaire.

9. Machine-outil à main selon l'une des revendications 1 à 8, **caractérisée en ce que** le premier et/ou le deuxième agencement d'excentrique (6 et/ou 7) présente une roue d'entraînement (32 ou 56) montée en position concentrique avec la ligne d'axe de rotation (9 ou 39), par le biais de laquelle l'entraînement de l'agencement excentrique correspondant (6 et/ou 7) s'effectue.

10. Machine-outil à main selon la revendication 9, **caractérisée en ce que** la roue d'entraînement respective (32 ou 56) est montée dans la zone d'extrémité dirigée en opposition au porte-outil (2) de l'agencement d'excentrique correspondant (6 ou 7).

11. Machine-outil à main selon la revendication 9 ou 10, **caractérisée en ce que** les deux roues d'entraînement (32, 56) sont formées par deux roues dentées (34, 57) qui s'engrènent l'une avec l'autre, parmi lesquelles l'une est entraînée par le moteur d'entraînement (8).

12. Machine-outil à main selon la revendication 9 ou 10, **caractérisée en ce que** le moteur d'entraînement (8), dans la position d'entraînement, entraîne les deux roues d'entraînement (32, 56), la position d'écart angulaire des roues d'entraînement (32, 56) l'une par rapport à l'autre restant conservée.

13. Machine-outil à main selon l'une des revendications 1 à 12, **caractérisée en ce que** les deux agencements d'excentrique (6, 7) sont réalisés pour l'essentiel de manière identique.

14. Machine-outil à main selon l'une des revendications 1 à 13, **caractérisée en ce que** la pièce d'entraînement (10, 44), au nombre d'une au moins, est montée dans une position diamétralement opposée à l'élément de masse déséquilibré correspondant (11 ou 38) par rapport à la ligne d'axe de rotation correspondante (9, 39), de telle sorte que, dans la position entraînée du dispositif d'entraînement (1 ), elle exécute un mouvement circulaire autour de cette ligne d'axe de rotation (9 ou 39).

15. Machine-outil à main selon l'une des revendications 1 à 14, **caractérisée en ce que** la pièce d'entraînement (10, 44), au nombre d'une au moins, présente une extrémité libre (16, 47), qui décrit un mouvement circulaire autour de la ligne d'axe de rotation correspondante (9, 39) dans la position entraînée, qui coopère avec un guide de coulisse (63) relié au porte-outil (2) ou réalisé sur celui-ci, au moyen duquel le mouvement excentrique de la pièce d'entraînement (10, 44) est transformé dans le mouvement linéaire (72) du porte-outil (2).

16. Machine-outil à main selon la revendication 15, **caractérisée en ce qu'**un élément de roulement (17, 49) ou un coulisseau coopérant avec le guide de coulisse (63) est monté sur l'extrémité libre (16, 47) de la pièce d'entraînement (10, 44), au nombre d'une au moins.

17. Machine-outil à main selon la revendication 15 ou 16, **caractérisée en ce que** le guide de coulisse (63) présente au moins un évidement transversal (64, 65) de la forme d'une fente ou d'une rainure, qui s'étend transversalement au mouvement linéaire (72) du porte-outil (2), et dans lequel s'engage la pièce d'entraînement (10, 44), au moins au nombre d'une.

18. Machine-outil à main selon l'une des revendications 15 à 17, **caractérisée en ce que** le guide de coulisse (63) est prévu sur une pièce de coulisse (67) montée sur le côté supérieur (66) du porte-outil (2) dirigé vers les agencements d'excentrique (6, 7).

19. Machine-outil à main selon la revendication 18, **caractérisée en ce que** la pièce de coulisse (67) est montée de façon pivotante sur le porte-outil (2) sur un axe de pivotement (74) qui s'étend parallèlement aux lignes d'axes de rotation (9, 39).

20. Machine-outil à main selon l'une des revendications 1 à 13, **caractérisée en ce que** la pièce d'entraînement (10, 44), au nombre d'une au moins, forme un agencement de bielle motrice (76) qui transforme le mouvement excentrique dans le mouvement linéaire (72) du porte-outil (2).

21. Machine-outil à main selon l'une des revendications 1 à 20, **caractérisée en ce que** les deux lignes d'axe de rotation parallèles (9, 39) coïncident.

22. Machine-outil à main selon la revendication 21, **caractérisée en ce que** les deux agencements d'excentrique (6, 7) se situent chacun sur un arbre (28, 41) monté en position fixe sur la machine-outil, au moins un arbre (41 ) étant réalisé comme arbre creux (19) et s'étendant de manière coaxiale avec l'autre arbre (28).

23. Machine-outil à main selon la revendication 22, **caractérisée en ce que** l'arbre creux (19) est monté en position rotative autour des lignes d'axe de rotation (9, 39) sur l'autre arbre (28), dont les deux parties d'extrémité (30, 31) dépassent de l'arbre creux (19).

24. Machine-outil à main selon l'une des revendications 21 à 23, **caractérisée en ce que**, sur chacune des parties d'extrémité (20, 30) des deux arbres (19, 28) dirigées en opposition au porte-outil (2), il est prévu une roue d'entraînement (32, 56) servant à l'entraînement des arbres (19, 28), qui est immobilisée en rotation, les deux roues d'entraînement (32, 56) étant montées à distance l'une de l'autre dans la direction des lignes d'axe de rotation (9, 39).

25. Machine-outil à main selon la revendication 24, **caractérisée en ce que** les éléments de masse déséquilibrés (11, 38) se situent sur la partie d'extrémité (21, 31) d'un arbre respectif correspondant (19, 28) dirigée vers le porte-outil (2).

26. Machine-outil à main selon l'une des revendications 1 à 25, **caractérisée en ce que** la machine-outil à main est une meuleuse et le porte-outil (2) une plaque de travail, en particulier rectangulaire, qui supporte un moyen abrasif.

27. Machine-outil à main selon l'une des revendications 1 à 26, **caractérisée en ce qu'**une membrane étanche (71 ) est montée entre le porte-outil (2) et la pièce de coulisse (67) afin de rendre l'espace intérieur de la machine (70) étanche vis-à-vis de l'environnement.
